# FASCICULE DE BREVET EUROPEEN

(11) **EP 1 102 978 B1**
(45) Date de publication et mention de la délivrance du brevet: **28.04.2004**
(21) Numéro de dépôt: 99936697.4
(22) Date de dépôt: 05.08.1999
(51) Int. Cl.: G01N 21/91

(54) **PROCEDE ET DISPOSITIF POUR LE CONTROLE NON DESTRUCTIF D'UNE SURFACE AU MOYEN D'UN PRODUIT COLORANT**
VERFAHREN UND VORRICHTUNG ZUR ZERSTÖRUNGSFREIEN OBERFLÄCHENPRÜFUNG MITTELS EINES FÄRBEMITTELS
METHOD AND DEVICE FOR NON-DESTRUCTIVE CONTROL OF A SURFACE USING A DYE PRODUCT

(30) Priorité: 05.08.1998 FR 9810062
(43) Date de publication de la demande: 30.05.2001
(73) Titulaire: Holores, Inc., Port St. Lucie, FL 34986 (US)
(72) Inventeur: PAILLIOTET, Pierre-Marie, F-91450 Soisy sur Seine (FR)
(74) Mandataire: Schrimpf, Robert
(86) Numéro de dépôt international: PCT/FR1999/001942
(87) Numéro de publication internationale: WO 2000/008449

(56) Documents cités:
- US-A- 4 699 512
- US-A- 4 893 008
- US-A- 5 133 198
- US-A- 5 333 052
- US-A- 5 554 318

## Description

L'invention concerne les techniques de contrôle non destructif de l'état d'une surface, au moyen d'un produit colorant pénétrant, telles que notamment les techniques de ressuage et de magnétoscopie.

Le contrôle non destructif par ressuage que l'on applique notamment au contrôle de la présence éventuelle de fissures sur une surface, comporte l'application à cette surface d'un colorant dans des conditions permettant au colorant de pénétrer dans les défauts à détecter, l'éclairage de la surface au moyen d'une lumière incidente et l'observation de la lumière émise par le colorant présent dans les fissures et par le colorant résiduel sur la surface.

Par exemple on éclaire la surface avec le faisceau d'une lampe à vapeur de mercure ou d'un tube néon qui contient un rayonnement capable d'exciter le colorant, lequel émet en réponse une lumière monochromatique du domaine visible que l'on peut observer, par exemple au moyen d'un dispositif photo sensible auquel sont éventuellement associés des moyens pour constituer une image numérique que l'on exploite par un dispositif de traitement d'images.

La couleur de cette lumière visible dépend du colorant utilisé, elle est orange, par exemple, lorsque le colorant est la Rhodamine 6G.

Une telle technique est décrite par exemple dans la publication FR 2 711 426.

Le problème se pose d'optimiser l'observation, notamment d'optimiser l'observation des fissures, laquelle est perturbée par l'observation simultanée de l'image du colorant résiduel qui reste à l'état de traces sur la surface.

On a proposé de réaliser cette optimisation par un traitement de l'image numérique, comme décrit par exemple dans la publication précitée.

Un autre problème réside dans la détermination de la profondeur des fissures.

La publication FR 2 736 152 décrit ainsi un procédé et un dispositif de dimensionnement des défauts par ressuage.

De fait, ces deux publications permettent d'apprécier la difficulté et la complexité conséquente des procédés et dispositifs qui ont été étudiés pour optimiser les images et pour apprécier les dimensions des fissures.

La présente invention a pour objet un procédé et un dispositif remarquables par leur simplicité, qui permettent d'optimiser les images et d'apprécier la profondeur des fissures.

L'invention est basée sur cette constatation que lorsque le produit colorant est excité par une onde polarisée rectiligne, le produit qui se trouve dans une zone de la surface ou dans une fissure émet une onde polarisée rectiligne qui fait avec l'onde polarisée rectiligne incidente un angle qui est fonction de l'épaisseur du produit dans la zone ou dans la fissure considérée.

Selon l'invention on utilise cet écart angulaire entre l'onde polarisée rectiligne incidente et l'onde polarisée rectiligne émise par le colorant pour éliminer de l'observation les zones où le produit colorant résiduel est présent sur la surface et ne conserver que les zones où ce produit a pénétré dans les fissures, en tirant parti du fait que l'écart correspondant à une onde provenant d'un colorant résiduel en surface est différent de celui correspondant au colorant présent dans une fissure, du fait que l'épaisseur du colorant résiduel en surface est toujours inférieure à l'épaisseur du colorant dans une fissure.

Selon un autre aspect de l'invention, on utilise également les écarts correspondants aux différentes fissures pour déterminer les profondeurs des fissures.

Un dispositif de mise en oeuvre de l'invention comprend donc essentiellement des moyens pour produire un faisceau incident ultraviolet polarisé rectiligne de longueur d'onde choisie pour exciter le produit colorant, des moyens de transmission pour guider ce faisceau vers la surface à étudier, des moyens d'observation pour observer les ondes polarisées rectilignes émises par le colorant de la surface et des fissures, et des moyens interposés sur le trajet de ces ondes émises, entre la surface et les moyens d'observation, pour sélectionner les ondes émises selon les écarts angulaires entre l'onde polarisée rectiligne incidente et les ondes polarisées rectilignes émises par le colorant.

Pour éclairer la surface en examen avec une onde polarisée rectiligne, on utilise une source de lumière non polarisée à laquelle on associe un polariseur ou, de préférence, on utilise une source qui fournit elle-même une lumière polarisée.

C'est le cas notamment d'un Laser qui délivre une onde polarisée rectiligne à bords parallèles.

Le laser présente en outre l'avantage de pouvoir délivrer une lumière d'une parfaite monochromaticité dont le faisceau très fin présente une grande longueur de cohérence.

Pour sélectionner les ondes polarisées rectilignes émises par le colorant, on utilise un ou des analyseurs d'onde polarisée placés sur le trajet de ces ondes.

On décrira ci-après des exemples de mise en oeuvre de l'invention, en référence aux figures du dessin joint, sur lequel :
- la figure 1 est un schéma d'un premier montage d'un dispositif conforme à l'invention appliqué à une technique de ressuage pour l'observation des fissures d'une surface ;
- la figure 2 est un schéma d'un deuxième montage de mise en oeuvre d'une technique de ressuage pour l'observation simultanée de deux faces opposées d'une pièce capable d'un mouvement de rotation et d'un déplacement X, Y, Z ;
- la figure 3 est un schéma d'un troisième montage de mise en oeuvre d'une technique de ressuage pour l'observation simultanée des deux faces opposées d'une plaque, ce montage comportant un jeu de miroirs oscillants commandés pour réaliser un balayage de ces faces par le faisceau incident ;
- la figure 4 est un schéma d'un quatrième montage de mise en oeuvre d'une technique de ressuage pour l'examen d'alésages ou d'alvéoles, et
- la figure 5 est un schéma d'un cinquième montage appliqué à la magnétoscopie des barres.

Les dispositifs de mise en oeuvre de l'invention qui sont représentés sur les figures comprennent essentiellement :
- un Laser (1),
- des moyens (T) pour transmettre le faisceau du Laser à une surface (S) à étudier ou à une surface étalon,
- une caméra d'observation (2) à téléobjectif dont l'objectif est équipé d'un analyseur (3).

Le Laser (1) est de préférence un Laser qui émet un flux ultraviolet polarisé centré sur une longueur d'onde appropriée au colorant utilisé, par exemple une longueur d'onde de 330 nanomètres.

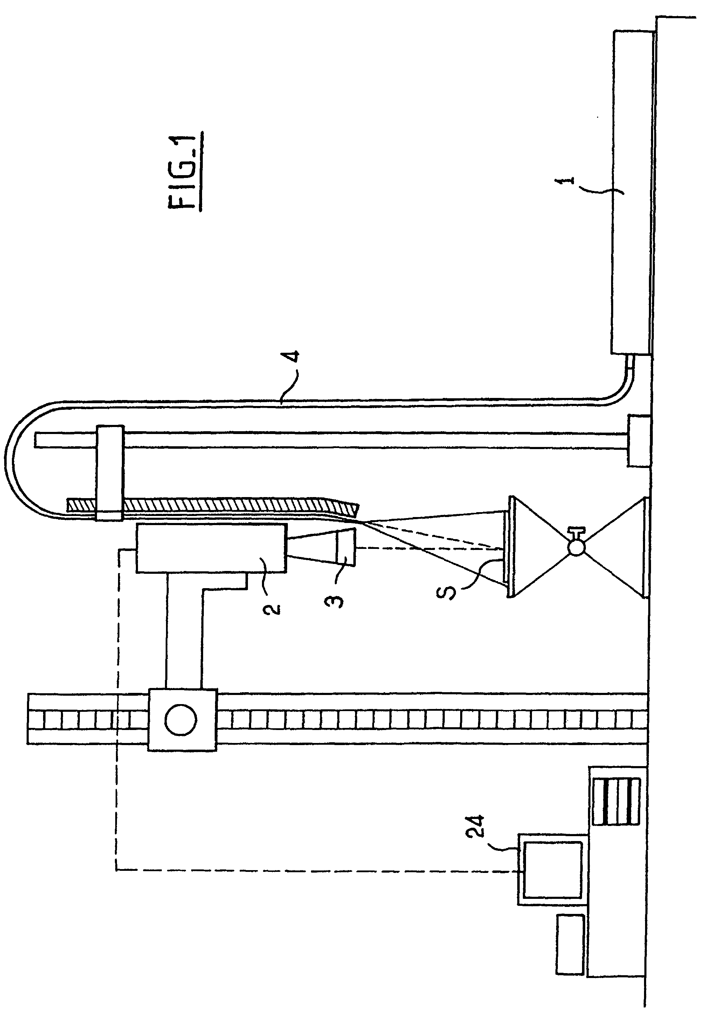

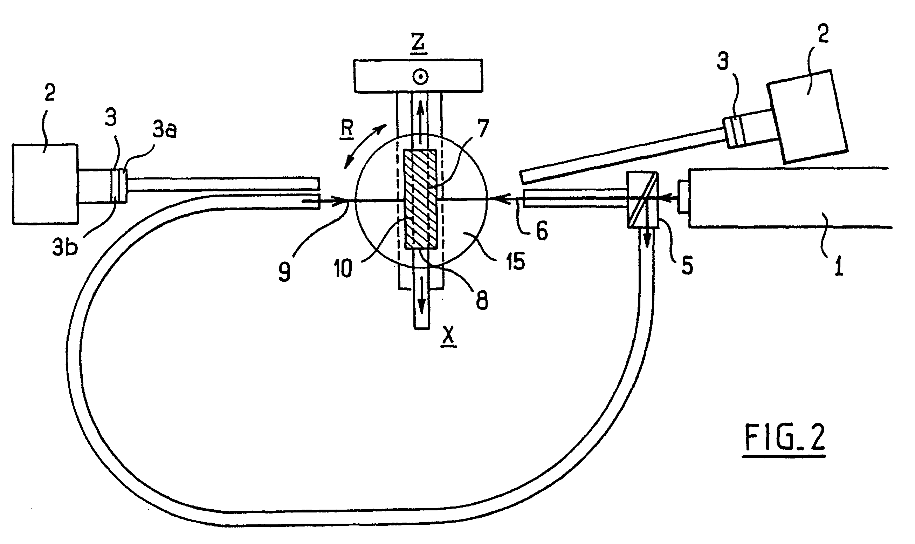

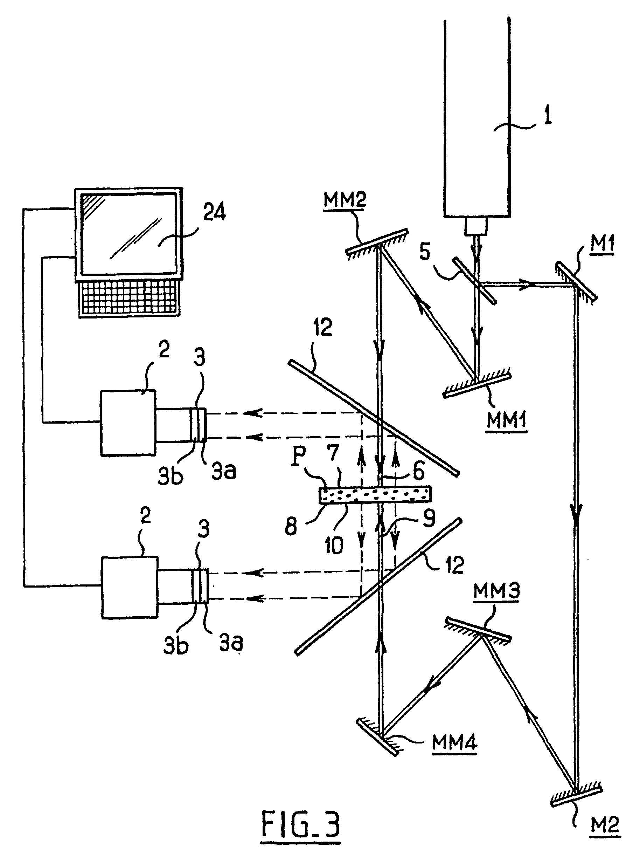

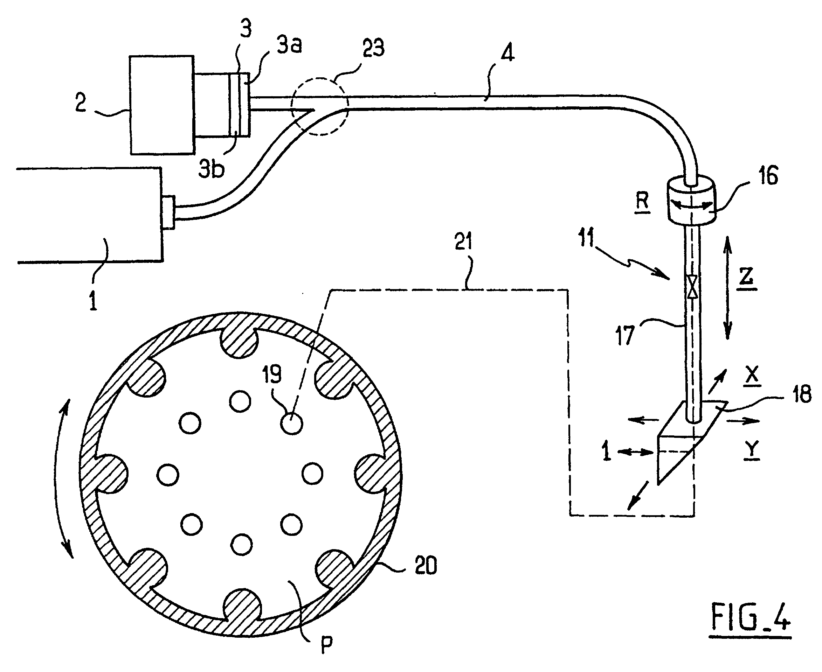

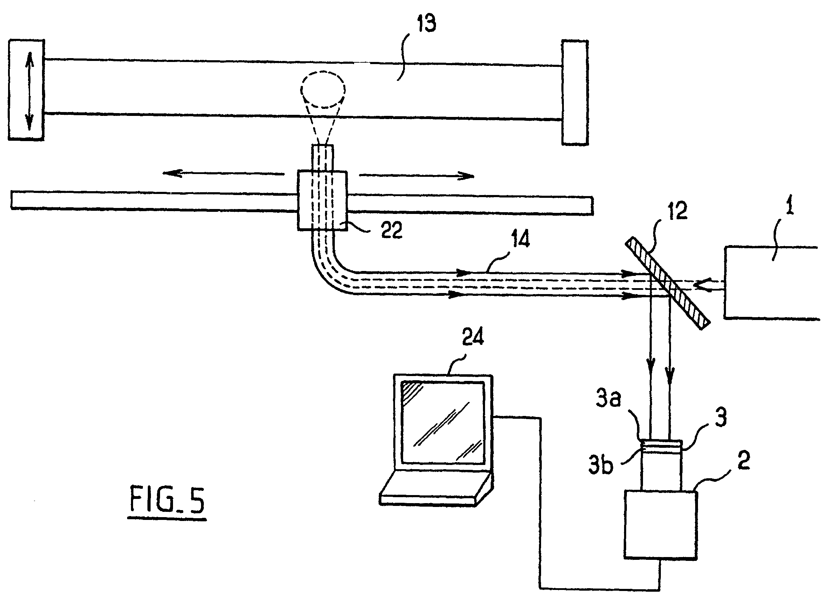

Les moyens de transmission (T) peuvent être très variés :
- dans le montage de la figure 1, le faisceau du Laser 1 est transmis par des fibres optiques (4) jusqu'à la surface (5) à examiner,
- dans le montage de la figure 2, une lame (5) est placée à la sortie du Laser (1) pour diviser le faisceau Laser en une portion de faisceau (6) qui est conduit par des fibres optiques ou autrement sur une surface (7) d'une pièce (8) à observer et en une portion de faisceau (9) qui est conduit par des fibres optiques ou autrement à une surface opposée (10) de la pièce (8),
- dans le montage de la figure 3, une lame (5) est placée à la sortie du Laser (1), comme dans le cas de la figure 2, pour diviser le faisceau du Laser en deux faisceaux (6, 9) aptes à illuminer respectivement l'une et l'autre des deux faces (7) et (10) d'une paroi (8). Dans cet exemple, le dispositif comporte des jeux de miroirs (M) et (MM) pour transmettre les deux faisceaux aux surfaces (7, 10),
- dans le montage de la figure 4, le faisceau du Laser (1) est transmis par des fibres optiques (4) à un endoscope (11) qui permet au faisceau d'accéder à des zones d'accès difficiles, par exemple pour éclairer la surface interne d'un alésage ou d'un alvéole,
- dans le montage de la figure 5, le faisceau du Laser (1) traverse une lame (12) pour être envoyé à la surface à examiner, en l'espèce une barre (13), par des fibres optiques (14).

Ces exemples ne sont pas exclusifs d'autres moyens de transmission.

Le faisceau laser incident étant beaucoup plus étroit que celui d'une lampe à vapeurs de mercure ou d'un tube néon, des moyens sont prévus, selon l'invention, pour balayer avec le faisceau la surface à examiner, soit en déplaçant le faisceau, soit en déplaçant la surface.

Dans le cas du montage de la figure 2, la pièce (8) à examiner est placée sur une table (15) qui peut tourner sur elle-même, qui peut également être déplacée par translation selon un axe (X) et qui peut monter et descendre selon un axe (Z) parallèle à l'axe de rotation de la pièce.

Dans le cas du montage de la figure 3, les miroirs de renvoi des deux portions des faisceaux du laser comprennent d'une part des miroirs fixes (M1, M2) et d'autre part des miroirs (MM1, MM2, MM3 et MM4) qui peuvent osciller, sous le pilotage d'un ordinateur programmé pour que les faisceaux réalisent un balayage des surfaces à examiner.

Dans le cas du montage de la figure 4, l'endoscope comporte un support 16 capable d'une rotation (R) sur lui-même, un guide d'onde (17) télescopique selon l'axe de rotation (Z) et un prisme d'extrémité (18) capable d'un mouvement en (X, Y), tandis que la pièce (P), qui comporte les alésages (19) à examiner est placée sur une table rotative (20). La ligne (21) sur la figure schématise le fait que le prisme d'extrémité (18) peut être descendu dans l'alésage (19).

Dans le cas du montage de la figure 5, la pièce (13) observée est une barre qui peut tourner sur elle-même et l'extrémité du guide (14) en fibres optiques est portée par un chariot (22) qui peut se déplacer parallèlement à la barre.

La caméra d'observation (2) et son analyseur d'onde polarisée (3) sont doublées s'il s'agit d'observer simultanément deux surfaces, comme dans le cas des montages des figures 2 et 3.

Des lames séparatrices sont utilisées le cas échéant pour laisser passer les rayons incidents et dévier les rayons émergents (figures 3 et 5).

Dans le cas du montage de la figure 4, grâce à un coupleur de fibres optiques (23), on utilise le même paquet de fibres optiques (4) pour transmettre à la pièce (P) le faisceau incident du Laser (1) et pour transmettre à la caméra (2) l'onde émise par le colorant excité.

Ceci est rendu possible par le fait que la caméra utilisée n'est pas sensible à un rayonnement ultraviolet.

Pour étalonner les appareils, on utilise de façon connue en soi, une cale présentant des fissures de profondeurs connues, que l'on a préparée par ressuage ou magnétoscopie.

En l'absence d'analyseur (3) ou en calant l'analyseur sur la polarité du Laser (1), l'image observée montre la présence des fissures de la cale noyées dans des taches lumineuses de même longueur d'onde dues au colorant résiduel en surface de la cale.

En faisant tourner l'analyseur conformément à l'invention, on constate que les tâches parasites disparaissent progressivement pour ne laisser que les images dues aux fissures étalons pour une certaine rotation de l'analyseur.

En continuant de faire tourner l'analyseur, on élimine successivement les images des fissures dans l'ordre des profondeurs croissantes : on peut donc établir une courbe d'étalonnage des degrés de rotation de l'analyseur en profondeurs de fissures, qui permettra de déterminer ultérieurement les profondeurs des fissures d'une surface à examiner.

De préférence, on utilise un analyseur double, c'est-à-dire qui comporte deux analyseurs successifs (3a, 3b) celui (3a) placé en avant servant à éliminer les tâches parasites et celui (3b) placé en arrière servant à déterminer les profondeurs des fissures.

Ces deux analyseurs sont par exemple montés dans une même tourelle et sont tournés ensemble jusqu'à élimination des tâches parasites, après quoi l'un seulement des analyseurs est tourné pour évaluer les profondeurs des fissures.

Chaque analyseur est de type en soi connu, par exemple constitué d'une lame sur une face de laquelle sont disposées des lignes parallèles de prismes identiques.

## Revendications

1. Procédé de contrôle non destructif de l'état d'une surface susceptible de présenter des fissures, par une méthode basée sur l'observation des ondes émises par un produit colorant appliqué sur la surface et dans les fissures, sous l'effet d'un faisceau d'excitation incident de longueur d'onde appropriée au produit colorant, dans lequel on utilise un faisceau incident ultraviolet, **caractérisé en ce qu'**on utilise un faisceau ultraviolet polarisé rectiligne et **en ce qu'**on observe les ondes émises par le colorant au travers d'un analyseur rotatif d'onde polarisée que l'on fait tourner d'abord pour éliminer de l'observation l'onde due au colorant résiduel sur la surface et ensuite pour déterminer les profondeurs des fissures.

2. Procédé selon la revendication 1, dans lequel le faisceau ultraviolet est centré sur une longueur d'onde de 330 nanomètres.

3. Procédé selon la revendication 1 ou 2, dans lequel on observe les ondes émises par le colorant au moyen d'une caméra qui n'est pas sensible à un rayonnement ultraviolet.

4. Procédé selon l'une des revendication 1 à 3, dans lequel on établit par étalonnage les degrés de rotation de l'analyseur qui éliminent successivement de l'observation les fissures de profondeurs croissantes.

5. Procédé selon l'une des revendications 1 à 4
dans lequel on balaye ladite surface avec le faisceau incident pendant l'observation, en déplaçant la surface ou le faisceau incident.

6. Dispositif pour la mise en oeuvre d'un procédé de ressuage ou de magnétoscopie utilisant un produit colorant dans les fissures d'une surface à examiner, qui comprend :
- des moyens de production (1) pour produire un faisceau ultraviolet.
- des moyens de transmission (T) pour guider ce faisceau vers la surface à examiner,
- des moyens d'observation (2) pour observer les ondes émises par le colorant sous l'effet de l'onde incidente,
**caractérisé en ce que** lesdits moyens de production (1) sont choisis pour produire un faisceau ultraviolet polarisé rectiligne, et **en ce que** le dispositif comporte un analyseur rotatif (3) d'onde polarisée sur le trajet des ondes émises par le colorant entre la surface et les moyens d'observation (2) en sorte qu'une rotation de l'analyseur permet d'abord de faire disparaître progressivement de l'observation les tâches parasites et ensuite de déterminer les profondeurs des fissures.

7. Dispositif selon la revendication 6, dans lequel les moyens de production (1) comprennent un générateur Laser.

8. Dispositif selon la revendication 6 ou 7, dans lequel le faisceau ultraviolet est centré sur une longueur d'onde de 330 nanomètres.

9. Dispositif selon l'une des revendications 6 à 8, dans lequel on utilise comme moyen d'observation une camera qui n'est pas sensible à un rayonnement ultraviolet.

10. Dispositif selon l'une des revendications 6 à 9 et qui comprend des moyens de déplacement de la surface ou du faisceau incident pour balayer la surface avec l'onde incidente pendant l'observation.

11. Dispositif selon la revendication 10, et qui comprend des miroirs oscillants (MM) pilotés par ordinateur pour dévier le faisceau incident afin de lui faire réaliser le balayage de la surface.

12. Dispositif selon la revendication 10 ou 11 dans lequel les moyens de transmission (T) comprennent un endoscope (11) terminé par un prisme (18) apte à pénétrer dans un alésage ou un alvéole d'une pièce à examiner.

13. Dispositif selon l'une des revendications 6 à 12 dans lequel les angles de rotation de l'analyseur rotatif (3) ont été étalonnés en correspondance des profondeurs des fissures.

14. Dispositif selon l'une des revendications 6 à 12, et dans lequel l'analyseur rotatif est constitué de deux analyseurs rotatifs successifs (3a, 3b), respectivement pour éliminer les tâches parasites dues au colorant résiduel sur la surface et pour déterminer la profondeur des fissures.

## Patentansprüche

1. Verfahren zur zerstörungsfreien Prüfung des Zustands einer Oberfläche, die Spalten aufweisen kann, durch eine Methode, die auf der Beobachtung von Wellen basiert, welche von einem auf die Oberfläche und in die Spalten aufgetragenen Färbemittel unter der Wirkung eines einfallenden Anregungsstrahls von für das Färbemittel geeigneter Wellenlänge abgestrahlt werden, bei dem ein ultravioletter einfallender Strahl verwendet wird, **dadurch gekennzeichnet, dass** ein geradliniger, polarisierter, ultravioletter Strahl verwendet wird und dass die von dem Färbemittel abgestrahlten Wellen über einen Drehwinkelanalysator für polarisierte Wellen beobachtet werden, der zunächst gedreht wird, um bei der Beobachtung diejenige Welle zu unterdrücken, die auf das Rest-Färbemittel an der Oberfläche zurückgeht, und um dann die Tiefe der Spalten zu ermitteln.

2. Verfahren nach Anspruch 1, bei dem der ultraviolette Strahl um eine Wellenlänge von 330 Nanometer zentriert ist.

3. Verfahren nach Anspruch 1 oder 2, bei dem die von dem Färbemittel abgestrahlten Wellen mittels einer Kamera beobachtet werden, die nicht bei ultravioletter Strahlung empfindlich ist.

4. Verfahren nach einem der Ansprüche 1 bis 3, bei dem man durch Eichen die Drehgrade des Analysators feststellt, bei denen danach die Spalten mit zunehmender Tiefe nicht mehr beobachtet werden.

5. Verfahren nach einem der Ansprüche 1 bis 4, bei dem die Oberfläche mit dem einfallenden Strahl während der Beobachtung abgetastet wird, indem die Oberfläche oder der einfallende Strahl bewegt wird.

6. Vorrichtung zum Einsatz eines Farbeindringprüfungs- oder Magnetoskopie-Verfahrens unter Verwendung eines Färbemittels in den Spalten einer zu prüfenden Oberfläche, die aufweist:
Erzeugungsmittel (1) zum Erzeugen eines ultravioletten Strahls;
Übertragungsmittel (T), um diesen Strahl zu der Oberfläche zu führen, die geprüft werden soll;
Beobachtungsmittel (2) zum Beobachten der unter der Wirkung der einfallenden Welle von dem Färbemittel abgestrahlten Wellen,
**dadurch gekennzeichnet, dass** die Erzeugungsmittel (1) so gewählt sind, dass ein geradliniger, polarisierter, ultravioletter Strahl erzeugt wird und dass die Vorrichtung einen Drehwinkelanalysator (3) für polarisierte Wellen auf dem Weg der von dem Färbemittel zwischen der Oberfläche und den Beobachtungsmitteln (2) abgestrahlten Wellen aufweist, sodass durch eine Drehung des Analysators zunächst die parasitären Flecken nach und nach aus der Beobachtung verschwinden und dann die Tiefe der Spalten bestimmt werden können.

7. Vorrichtung nach Anspruch 6, bei der die Erzeugungsmittel (1) einen Laser umfassen.

8. Vorrichtung nach Anspruch 6 oder 7, bei der der ultraviolette Strahl um eine Wellenlänge von 330 Nanometer zentriert ist.

9. Vorrichtung nach einem der Ansprüche 6 bis 8, bei dem als Beobachtungsmittel eine Kamera verwendet wird, die nicht bei ultravioletter Strahlung empfindlich ist.

10. Vorrichtung nach einem der Ansprüche 6 bis 9, die Mittel zum Verschieben der Oberfläche oder des einfallenden Strahls zum Abtasten der Oberfläche mit der einfallenden Welle während der Beobachtung aufweist.

11. Vorrichtung nach Anspruch 10, die computergesteuerte Oszillatorspiegel (MM) zum Ablenken des einfallenden Strahls aufweist, um damit die Oberfläche abzutasten.

12. Vorrichtung nach Anspruch 10 oder 11, bei der die Übertragungsmittel (T) ein Endoskop (11) aufweisen, das in einem Prisma (18) endet, welches in eine Bohrung oder eine Zelle eines zu prüfenden Teils eingeführt werden kann.

13. Vorrichtung nach einem der Ansprüche 6 bis 12, bei der die Drehwinkel des Drehwinkelanalysators (3) in Abhängigkeit von der Tiefe der Spalten geeicht wurden.

14. Vorrichtung nach einem der Ansprüche 6 bis 12, bei der der Drehwinkelanalysator aus zwei aufeinander folgenden Drehwinkelanalysatoren (3a, 3b) gebildet wird, die die durch das Rest-Färbemittel bedingten parasitären Flecken entfernen und die Tiefe der Spalten bestimmen.

## Claims

1. A method of non-destructive testing of the state of a surface which may have cracks in it by observing waves emitted by a dye applied to the surface and present in the cracks in response to an incident excitation beam of wavelength appropriate to the dye, in which an ultraviolet incident beam is used, **characterized in that** a rectilinearly polarized ultraviolet beam is use and **in that** the waves emitted by the dye are observed through a rotatable polarized wave analyser that is first rotated to eliminate from observation the wave due to residual dye on the surface and then to determine the depths of the cracks.

2. A method according to claim 1, wherein the ultraviolet beam is centred on a wavelength of 330 nanometres.

3. A method according to either claim 1 or claim 2, wherein the waves emitted by the dye are observed using a video camera that is not sensitive to ultraviolet radiation.

4. A method according to any of claims 1 to 3, wherein a calibration process establishes angles of rotation of the analyser which successively eliminate from observation cracks of increasing depth.

5. A method according to any of claims 1 to 4, wherein said surface is scanned with the incident beam by moving the surface or the incident beam during observation.

6. A system for implementing a dye penetration or magnetoscopic method using a dye present in the cracks of a surface to be examined, which system includes:
- production means (1) for producing an ultraviolet beam,
- transmission means (T) for guiding that beam toward the surface to be examined,
- observation means (2) for observing waves emitted by the dye due to the incident wave,
**characterized in that** said production means (1) are chosen to produce a rectilinearly polarized ultraviolet beam, and **in that** the device includes a rotary analyser (3) of polarized waves on the path of the waves emitted by the dye between the surface and the observation means (2) so that rotating the analyser first progressively eliminates from observation the unwanted spots and then determines the depths of the cracks.

7. A system according to claim 6, wherein the production means (1) comprise a laser generator.

8. A system according to claim 6 or claim 7, wherein the ultraviolet beam is centred on a wavelength of 330 nanometres.

9. A system according to any of claims 6 to 8, wherein a video camera that is not sensitive to ultraviolet radiation is used for observation.

10. A system according to any of claims 6 to 9, including means for moving the surface or the incident beam to scan the surface with the incident wave during observation.

11. A system according to claim 10, including oscillating mirrors (MM) controlled by computer to deflect the incident beam to cause it to scan the surface.

12. A system according to claim 10 or claim 11, wherein the transmission means (T) include an endoscope (11) terminating in a prism (18) adapted to enter a bore or a cell of a part to be examined.

13. A system according to any of claims 6 to 12, wherein the angles of rotation of the rotatable analyser (3) have been calibrated in correspondence with the depths of cracks.

14. A system according to any of claims 6 to 12, wherein the rotatable analyser consists of two successive rotatable analysers (3a, 3b) respectively for eliminating unwanted spots due to residual dye on the surface and for determining the depth of cracks.
